## Europäisches Patentamt
## European Patent Office
## Office européen des brevets

(19)

(11) Veröffentlichungsnummer: **0 001 446**
**B1**

(12) **EUROPÄISCHE PATENTSCHRIFT**

(45) Veröffentlichungstag der Patentschrift:
**23.02.83**

(21) Anmeldenummer: **78101057.4**

(22) Anmeldetag: **03.10.78**

(51) Int. Cl.³: **C 08 F 6/24,** C 08 F 6/16,
C 08 F 14/06 // (C08F14/06,
218/08)

(54) **Verfahren zur Verhinderung der Schaumbildung bei der Restmonomerentfernung aus wässrigen Dispersionen von vinylchloridhaltigen Polymeren.**

(30) Priorität: **03.10.77 DE 2744462**

(43) Veröffentlichungstag der Anmeldung:
**18.04.79 Patentblatt 79/8**

(45) Bekanntmachung des Hinweises auf die Patenterteilung:
**23.02.83 Patentblatt 83/8**

(84) Benannte Vertragsstaaten:
**BE CH FR GB NL**

(56) Entgegenhaltungen:
DE-A-2 531 111
FR-A-2 302 308

**Die Akte enthält technische Angaben, die nach dem Eingang der Anmeldung eingereicht wurden und die nicht in dieser Patentschrift enthalten sind.**

(73) Patentinhaber: **WACKER-CHEMIE GMBH,
Prinzregentenstrasse 22, D-8000 München 22 (DE)**

(72) Erfinder: **Rostock, Kai, Dr., Seltenhornstrasse 11,
D-8263 Burghausen (DE)**
Erfinder: **Birke, Johann, Bruckberstrasse 216,
D-8261 Marktl/Inn (DE)**
Erfinder: **Wiedholz, Rudolf, Dr., Gluckstrasse 41,
D-8263 Burghausen (DE)**
Erfinder: **Bauer, Johann, Dr., Görresstrasse 3,
D-8263 Burghausen (DE)**
Erfinder: **Balwé, Thomas, Dr., Brucknerstrasse 13,
D-8263 Burghausen (DE)**

## Verfahren zur Verhinderung der Schaumbildung bei der Restmonomerentfernung aus wässrigen Polymerdispersionen von vinylchloridhaltigen Polymeren

Bei der Restmonomerentfernung von wässrigen Polymerdispersionen im Anschluss an den Polymerisationsprozess treten insbesondere bei der Vakuumbehandlung schwerwiegende Schaumprobleme auf. Diese Schaumschichten, wie sie besonders bei Vakuumbehandlung und gleichzeitiger Dampfeinblasung entstehen, hemmen den ungehinderten Durchzug des Schleppgases, den Stoffübergang von der Dispersion in den Gasraum und damit überhaupt den Erfolg einer wirksamen Restmonomerentfernung aus dem Polymerisationsansatz. Nachdem man die Toxizität einiger Monomerer, wie beispielsweise Vinylchlorid, erkannt hat, wird grosser Wert auf niedrige Restmonomergehalte in Polymerisationsprodukten gelegt. Bisher wurde das Schaumproblem durch chemische Antischaummittel und mechanische Vorrichtungen zur Schaumbekämpfung zu lösen versucht. Auch ein Verfahren zur Dampfeinblasung in die Schaumschicht brachte keine hinreichend befriedigenden Ergebnisse.

Aufgabe der Erfindung war es, ein Verfahren zur Verhinderung der Schaumbildung bei der Restmonomerentfernung aus wässrigen Polymerdispersionen zu finden.

Gegenstand der Erfindung ist ein Verfahren zur Verhinderung der Schaumbildung bei der Restmonomerentfernung aus wässrigen Dispersionen vinylchloridhaltiger Polmymeren, die übliche Mengen an Emulgatoren und/oder Schutzkolloiden enthalten und Feststoffgehalte zwischen 15 und 55 Gew.% aufweisen, vermittels Wasserdampfbehandlung und Evakuieren des Gasraumes oberhalb der Dispersion auf einen Druck von 0,5 bis 1 bar, dadurch gekennzeichnet, dass der Dampf in einem Bereich zwischen einem Viertel und drei Viertel der Füllhöhe unterhalb des Flüssigkeitsniveaus des Autoklaven an einer oder mehreren Stellen eingeblasen wird und dass kontinuierlich 5 bis 50 Gew.%, vorzugsweise 15 bis 35 Gew.%, des in die Dispersion eingeblasenen Wasserdampfes unkondensiert durch die Dispersion hindurchgeblasen werden.

Der Dampf kann dabei an einer oder mehreren Stellen in den Autoklaven eingeblasen werden, beispielsweise durch seitlich angebrachte Dampfeinlasstutzen. Die Dampfeinblasrichtung kann beispielsweise horizontal, von unten nach oben oder von der Seite schräg nach unten erfolgen. Um eine hinreichende Durchmischung des Dampfes mit dem Polymerisationsprodukt zu erreichen, muss das Einblasen des Dampfes mindestens ein Viertel der Gesamtfüllhöhe unterhalb des Flüssigkeitsniveaus des Autoklaven vorgenommen werden. Ausserdem hat es sich als zweckmässig erwiesen, den eingeblasenen Dampf durch bekannte statische, mechanische oder dynamische Mischvorrichtungen mit der Dispersion zu vermischen.

Überraschenderweise tritt bei erfindungsgemässer Behandlung von Polymerisationsdispersionen, die übliche Mengen an Emulgatoren und/oder Schutzkolloiden enthalten, abgesehen von einer minimalen Schaumbildung in der Startphase, keine Schaumbildung während des Entgasungsvorganges mehr ein. Dies ist um so überraschender, da bei einer Dampfbehandlung der Schaumphase oberhalb des Flüssigkeitsniveaus nach herkömmlichen Verfahrensweisen der Schaum nicht erfolgreich bekämpft werden kann. Bei stark emulgatorhaltigen Dispersionen bilden sich ggf. grosszellige Lamellen, die jedoch leicht wieder zerplatzen. Wird hingegen der Dampf so und in solchen Mengen eingeblasen, dass nicht ein Teil davon beispielsweise bereits zu Beginn der Behandlung durch die Dispersion durchtritt, sondern er darin völlig kondensiert, oder wird die Dispersion indirekt beheizt (vgl. DE-A 25 31 111), so tritt starke Schaumentwicklung ein, die im allgemeinen nur durch Verlangsamung des Entgasungsverfahrens einigermassen beherrscht werden kann. Dies führt jedoch zu übermässiger thermischer Belastung des Polymeren.

Das Verfahren zur Schaumbekämpfung ist wirksam bei Polymerdispersionen, die durch übliche Polymerisationsprozesse hergestellt wurden. Solche Polymerdispersionen enthalten im allgemeinen Homo- oder Copolymere mit einem Feststoffgehalt von 15 bis 55 Gew.% in der wässrigen Phase. Als repräsentative äthylenisch ungesättigte Comonomere, die in den vinylchloridhaltigen Polymeren enthalten sein können, werden genannt: Olefine, Styrole, substituierte Styrole, Acrylmonomere und substituierte Acrylmonomere, Vinylester wie z.B. Vinylacetat, Vinyläther, Vinylketone, ungesättigte Dicarbonsäuren sowie deren Halb- und Vollester. Die Polymerdispersionen können sowohl nach dem Emulsions- wie dem Suspensionspolymerisationsverfahren hergestellt worden sein. Im allgemeinen enthalten solche Polymerdispersionen Emulgatoren in Mengen zwischen 0,01 bis 2 Gew.%, bezogen auf Monomeres, und/oder Schutzkolloide in Mengen von 0,05 bis 2 Gew.%, bezogen auf die eingesetzten Monomeren.

Als Schutzkolloide werden in diesem Zusammenhang Polyvinylalkohole, teilweise acetylierte Polyvinylalkohole, wasserlösliche Cellulosederivate, wasserlösliche Stärkeäther, Polyacrylsäure und Copolymerisate, Polyvinylpyrollidon, insbesondere teil- bzw. vollverseifte Polyvinylalkohole verstanden.

Als Emulgatoren werden alle üblicherweise bei der Polymerisation eingesetzten, wie z.B. nichtionische, anionische oder kationische Emulgatoren verstanden.

Bei dem Entgasungsprozess wird Wasserdampf in die entspannte, noch warme Polymerdispersion eingeleitet. Unter Wasserdampf wird in diesem Zusammenhang nasser, gesättigter oder ungesättigter Wasserdampf mit einem Druckbereich zwischen 2 und 10 bar und Temperaturen zwischen 115 und 180°C, üblicherweise wird gesättigter Wasserdampf verstanden. Natürlich kann der Druckbereich des Wasserdampfes nach unten bzw. oben weiter ausgedehnt werden, doch hat es sich erwiesen, dass Druckbereiche unter 2 bar zu gross dimensionierte Einblasrohre erforderlich machen und Druckbereiche über 10 bar in diesem Zusammenhang keinen entscheidenden Vorteil bieten. Der Gasraum über der Polymerdispersion wird während dem Dampfeinblasungsprozess kontinuierlich evakuiert. Dabei sind in dem Gasraum über der Dispersion Druckbedingungen unter 1 bar bis herab zu 0,5 bar zu verzeichnen. Da die Polymerdispersion während des Entgasungsprozesses eine Gleichgewichtstemperatur von ca. 70 bis 85°C einnimmt, ist es nicht sinnvoll, den Gasraum niedriger als 0,5 bar zu evakuieren. Im allgemeinen wird man einen Unterdruck einstellen, der geringfügig unterhalb dem Gleichgewichtsdruck des Wassers bzw. des Polymeransatzes bei der Entgasungstemperatur liegt.

Als statische Mischer werden in diesem Zusammenhang Mischrohre mit den für statische Mischer kennzeichnenden Konstruktionsdetails verstanden, mechanische Mischer sind beispielsweise Rührer, als dynamische Mischer werden beispielsweise Venturi-Mischdüsen verstanden.

Das erfindungsgemässe Verfahren wird am Beispiel einer Restvinylchloridentgasung von PVC-Suspensionspolymeren im Autoklaven besonders deutlich. Legt man beispielsweise an einen auspolymerisierten Suspensionspolyvinylchloridansatz Vakuum an, so bildet sich eine Schaumschicht aus, die jedoch beispielsweise durch den Zusatz von chemischen Antischaummitteln in Grenzen gehalten werden kann. Wird Dampf durch das Bodenventil in den Autoklaven eingeblasen, und der eingeblasene Dampf kondensiert in der Suspension, so ruft dieser an der Suspensionsoberfläche trotz Antischaummitteldosierung eine so starke Schaumbildung hervor, dass die Unterdruckentgasung des freien Gasraumes über der Dispersion nicht mehr mit voll geöffnetem Unterdruckventil betrieben werden kann. Wird jedoch erfindungsgemäss die Dampfzufuhr erhöht und die Dampfeinblasstelle in den angegebenen Bereich verlegt, so wird ein Punkt erreicht, wo unkondensierter Dampf durch die Suspensionsoberfläche tritt. Überraschenderweise geht die Schaumbildung sofort zurück und der aus der Oberfläche austretende Wasserdampf kann zusammen mit dem gleichzeitig austretenden Vinylchlorid ungehindert über die Vakuumleitung abgezogen werden.

Als vorteilhaft stellt sich weiter heraus, dass bei dem ungehinderten Durchzug des Schleppdampfes durch die Suspension weniger Kondensationswärme an das Produkt abgegeben wird. Das Produkt übersteht dadurch mehrstündige Dampfeinwirkung ohne thermische Schädigung. Der Restmonomergehalt kann gegenüber herkömmlichen Verfahren in kürzerer Zeit und auf niedrigere Werte abgesenkt werden.

Die folgenden Beispiele sollen die Erfindung erläutern:

Beispiel 1 (Vergleichsbeispiel)
In einem 25,5 m³-V₂A-Autoklaven mit Impeller und Stromstörer befinden sich nach beendeter Polymerisation 22 m³ einer Suspension mit 48 Gew.% Festgehalt und einem Vinylchlorid/Vinylacetat-Verhältnis im Copolymeren von 15:85 Gew.%, einem K-Wert von 50 und einer mittleren Korngrösse von 150 μm. Die Füllhöhe des Autoklaven beträgt 3,6 m. Über dem Flüssigkeitsniveau ist ein Restgasraum von 50 cm. Die Polymerdispersion enthielt 18 kg Polyvinylalkohol (mit einer Verseifungszahl von 190). Nach einer Stunde Unterdruckbehandlung bei 70°C und 0,6 bar, ohne Dampfeinblasung, werden an den Polymeren der Suspension gaschromatographisch folgende Restmonomermengen gemessen:

Vinylchlorid: 3000 ppm
Vinylacetat: 8000 ppm

Nun werden über das Bodenventil während drei Stunden 3 t Wasserdampf (4 bar/145°C) eingeleitet, wobei der Autoklaveninhalt auf 90°C gehalten wird. Obwohl während dem fortlaufenden Entgasungsprozess Entschäumerlösung (300 g Wacker-Silicon, Polydimethylsiloxanemulsion 45 Gew.% in 100 l Wasser) eingegeben wird, steigt die Schaumschicht über der Polymerdispersion so hoch, dass der Abzug des Schleppdampfes durch Drosseln des Unterdruckventils eingeschränkt werden muss. Während der Entgasung kondensieren die 3 t Dampf in der Suspension. Die über das Unterdruckventil abgezogene Dampfmenge beträgt höchstens 1 t, der Suspensionsspiegel steigt während der Dampfbehandlung an, so dass nach zwei Stunden Unterdruckentgasung das Unterdruckventil fast vollständig geschlossen werden muss. Die Suspension ist nach dieser Behandlung tiefgelb gefärbt, was auf thermische Schädigung des Produktes hinweist. Der Restmonomergehalt des Polymeren der Suspension beträgt am Ende der Behandlung:

Vinylchlorid: 500 ppm
Vinylacetat: 2000 ppm

Beispiel 2 (erfindungsgemäss)
Es gelten die selben Verhältnisse wie in Beispiel 1 in bezug auf Autoklav und Suspension. Nach einer Stunde Unterdruckbehandlung bei 70°C und 0,7 bar wird der Dampf aber nicht über das Bodenventil, sondern über ein gebogenes Rohr, das 1,80 m tief in die Suspension eintaucht, eingeleitet. Es werden fortlaufend 3 t Dampf von 4 bar/145°C während drei Stunden bei einer Innentemperatur der Dispersion von 90°C eingeleitet. Ca. 15% des eingeblasenen Dampfes schlagen durch die Suspensionsoberfläche unkondensiert hindurch und verhindern so die Ausbildung einer dicken Schaumschicht. Das Unterdruckventil kann während der gesamten drei Stunden Dampfbehandlung voll geöffnet bleiben und somit der Schleppdampf ungehindert duchgezogen werden. Das Suspensionsflüssigkeitsniveau steigt während der Dampfbehandlung nicht an, das Produkt ist thermisch nicht geschädigt. Nach erfolgter Dampfbehandlung wird ein Restmonomerengehalt des Polymeren der Suspension von 40 ppm Vinylchlorid und 800 ppm Vinylacetat gemessen.

Beispiel 3 (erfindungsgemäss)

Es wird wie in Beispiel 2 verfahren, nur wird das Dampfeinleitungsrohr nur 1,3 m in das Flüssigkeitsniveau eingetaucht und vor die Dampfaustrittsöffnung eine Venturi-Düse aufgesetzt. Nach ebenfalls dreistündigem Einleiten von 3 t Wasserdampf von 4 bar/145°C und voll geöffnetem Unterdruckventil ergibt sich im thermisch ungeschädigten Polymeren in der Suspension ein Restmonomerengehalt von 25 ppm Vinylchlorid und 500 ppm Vinylacetat.

**Patentansprüche**

1. Verfahren zur Verhinderung der Schaumbildung bei der Restmonomerentfernung aus wässrigen Dispersionen vinylchloridhaltiger Polymeren, die übliche Mengen an Emulgatoren und/oder Schutzkolloiden enthalten und Feststoffgehalte zwischen 15 und 55 Gew.% aufweisen, vermittels Wasserdampfbehandlung und gleichzeitigem Evakuieren des Gasraumes oberhalb der Dispersion auf einen Druck von 0,5 bis 1 bar, dadurch gekennzeichnet, dass der Dampf in einem Bereich zwischen einem Viertel und drei Viertel der Füllhöhe unterhalb des Flüssigkeitsniveaus des Autoklaven an einer oder mehreren Stellen eingeblasen wird und dass kontinuierlich 5 bis 50 Gew.%, vorzugsweise 15 bis 35 Gew.%, des in die Dispersion eingeblasenen Wasserdampfes unkondensiert durch die Dispersion hindurchgeblasen werden.

2. Verfahren nach Anspruch 1, dadurch gekennzeichnet, dass der eingeblasene Dampf durch bekannte statische, mechanische oder dynamische Mischvorrichtungen mit der Dispersion vermischt wird.

**Claims**

1. Process for prevention of foaming when removing residual monomer from aqueous dispersions of polymers containing vinyl chloride, which dispersions contain customary amounts of emulsifiers and/or protective colloids and have solids contents of between 15 and 55% by weight, by means of treatment with steam, with simultaneous evacuation of the gas space above the dispersion in order to obtain a pressure of from 0.5 to 1 bar, characterized in that the steam is blown into the autoclave at one or more points within a zone which is between one-quarter and three-quarters of the filling height below the level of the liquid in the autoclave, and that continuously 5 to 50% by weight, preferably 15 to 35% by weight, of the steam blown into the dispersion are blown uncondensed through the dispersion.

2. Process according to claim 1, characterized in that the blown-in steam is mixed with the dispersion by known static, mechanical or dynamic mixing devices.

**Revendications**

1. Procédé pour empêcher la formation de mousse lors de l'élimination de monomères résiduels de dispersions aqueuses de polymères renfermant du chlorure de vinyle contenant des quantités usuelles d'agents émulsionnants et/ou de colloïdes protecteurs et présentant une teneur pondérale en matières solides comprise entre 15 et 55%, selon lequel on effectue un traitement à la vapeur et on met en même temps sous vide l'atmosphère située au-dessus de la dispersion à une pression de 0,5 à 1 bar, ledit procédé étant caractérisé en ce qu'on injecte la vapeur dans une zone située entre un quart et trois quarts de la hauteur de remplissage au-dessous du niveau du liquide de l'autoclave en un ou plusieurs points et en ce que de 5 à 50% en poids, de préférence de 15 à 35% en poids de la vapeur d'eau injectée dans la dispersion passent en continu à travers ladite dispersion sous une forme non condensée.

2. Procédé selon la revendication 1, caractérisé en ce que la vapeur injectée est mélangée à la dispersion par des dispositifs de mélange connus statiques, mécaniques ou dynamiques.